# DEMANDE DE BREVET EUROPEEN

(11) **EP 2 551 244 A1**
(43) Date de publication de la demande: **30.01.2013**
(21) Numéro de dépôt: 12178002.7
(22) Date de dépôt: 26.07.2012
(51) Int. Cl.: C03B 9/347

(54) **Moule finisseur pour le formage d'un article en verre, comme par exemple un flacon en verre**

(30) Priorité: 29.07.2011 FR 1156966
(71) Demandeur: Pochet du Courval, 75010 Paris (FR)
(72) Inventeur: BENOIT, Sébastien, 80220 BOUTTENCOURT (FR); LOUCHET, François, 76260 EU (FR)
(74) Mandataire: Domenego, Bertrand

(57) **Abrégé**

Le moule finisseur (1) comprend une empreinte (10) de réception d'une ébauche de l'article en verre et délimitée par un corps central (11) disposé entre un couvercle (12) et un fond (13). Le corps central est formé par un nombre pair et au moins égal à quatre secteurs (20) complémentaires, déplaçables radialement et simultanément entre une position active de moulage de l'article à partir de ladite ébauche et dans laquelle les secteurs (20) sont appliqués latéralement les uns contre les autres et une position passive de démoulage de l'article dans laquelle lesdits secteurs (20) sont écartés latéralement les uns des autres.

## Description

La présente invention concerne un moule finisseur pour le formage d'un article en verre, comme par exemple un flacon en verre.

Généralement les flacons en verre sont obtenus en introduisant au moins une goutte de verre, également appelée paraison, dans une empreinte d'un moule ébaucheur et à préformer une ébauche par exemple par soufflage d'air dans ce moule ébaucheur.

Ensuite, l'ébauche ainsi réalisée est démoulée et transférée par un bras manipulateur, dans une empreinte d'un moule finisseur et de l'air est soufflé à l'intérieur de l'ébauche de façon à former définitivement le flacon.

Le plus souvent, le moule finisseur est constitué par un ensemble constitué de deux demi-moules et de tiroirs ménageant entre eux l'empreinte dans laquelle l'ébauche est placée. Les tiroirs sont déplaçables selon une trajectoire rectiligne entre une position active de moulage de l'article à partir de l'ébauche et une position passive de démoulage de cet article.

Mais, la tendance pour les flacons en verre, plus particulièrement dans le domaine de la cosmétique et de la parfumerie, est de réaliser sur la paroi externe du flacon des motifs en relief et/ou en creux. Pour cela, des motifs en relief et/ou en creux sont réalisés sur la paroi interne du moule finisseur de telle sorte que ces motifs se reproduisent sur la paroi externe du flacon lors de son moulage dans ce moule finisseur.

Or, il s'avère que ce type de moules finisseurs à tiroirs ne sont pas adaptés à ce genre de flacon ce qui pose des problèmes lors du démoulage en entraînant une dégradation des motifs en relief et/ou en creux.

En effet, ces moules finisseurs ne sont pas adaptés à un démoulage parfaitement symétrique des motifs en relief et/ou en creux, en assurant une thermique homogène entre les demi-moules et les tiroirs et donc de garantir des plans de joint pratiquement invisibles.

L'invention a pour but de proposer un moule finisseur pour le formage d'un article en verre qui permet d'éviter ce type d'inconvénient.

L'invention a donc pour objet un moule finisseur pour le formage d'un article en verre, comme par exemple un flacon en verre, du type comprenant une empreinte de réception d'une ébauche dudit article et délimitée par un corps central disposé entre un couvercle et un fond, **caractérisé en ce que** le corps central est formé par un nombre pair et au moins égal à quatre secteurs complémentaires, déplaçables radialement et simultanément entre une position active de moulage de l'article à partir de ladite ébauche dans laquelle les secteurs sont appliqués latéralement les uns contre les autres et une position passive de démoulage de l'article dans laquelle lesdits secteurs sont écartés latéralement les uns des autres.

Selon d'autres caractéristiques de l'invention :
- le couvercle est formé de deux demi-couvercles reliés chacun par un axe d'articulation à chaque secteur adjacent d'une moitié de secteurs de l'ensemble des secteurs,
- les demi-couvercles sont reliés à des moyens de commande du déplacement de chaque demi-couvercle entre une position de fermeture de l'empreinte et une position d'ouverture de ladite empreinte,
- chaque demi-couvercle comporte un demi-orifice central déterminant, en position de fermeture desdits demi-couvercles, un orifice de positionnement d'un col de l'ébauche de l'article en verre,
- les secteurs adjacents d'une moitié de secteurs sont reliés entre eux, à l'opposé du couvercle, par un organe de liaison articulé sur chacun desdits secteurs,
- chaque organe de liaison comprend une patte en forme d'arc de cercle,
- le fond comporte des moyens de centrage des secteurs dans la position active desdits secteurs,
- les moyens de centrage comprennent un rebord ménagé sur le fond et en saillie à l'intérieur de l'empreinte et une rainure ménagée à la partie inférieure de chaque secteur et destinée à coopérer chacune avec ledit rebord,
- le fond comporte des moyens de guidage des secteurs entre les positions, respectivement active et passive, et
- les moyens de guidage comprennent une gorge ménagée sur la face supérieure du fond et destinée à coopérer avec un galet disposé sur la face inférieure du secteur correspondant.

Les caractéristiques et avantages de l'invention apparaîtront au cours de la description qui va suivre, donnée à titre d'exemple et faite en référence aux dessins annexés, sur lesquels :
- la Figure 1 est une vue en perspective d'un premier mode de réalisation d'un moule finisseur, conforme à l'invention, en position de moulage,
- la Figure 2 est une vue schématique en coupe transversale du corps central du moule finisseur de la Figure 1,
- la Figure 3 est une vue en perspective d'un demi-corps et d'un demi-couvercle du moule finisseur de la Figure 1,
- la Figure 4 est une vue en perspective de côté et partiellement de dessous de la Figure 3,
- la Figure 5 est une vue en perspective du fond et des moyens de guidage des secteurs du corps central,
- la Figure 6 est une vue de dessus du fond du moule finisseur de la Figure 1,
- la Figure 7 est une vue en perspective analogue à la Figure 1 avec le moule finisseur en position de démoulage,
- la Figure 8 est une vue en perspective d'un second mode de réalisation d'un moule finisseur, conforme à l'invention, en position de moulage, et
- la Figure 9 est une vue en perspective de côté et partiellement de dessous de la Figure 8.

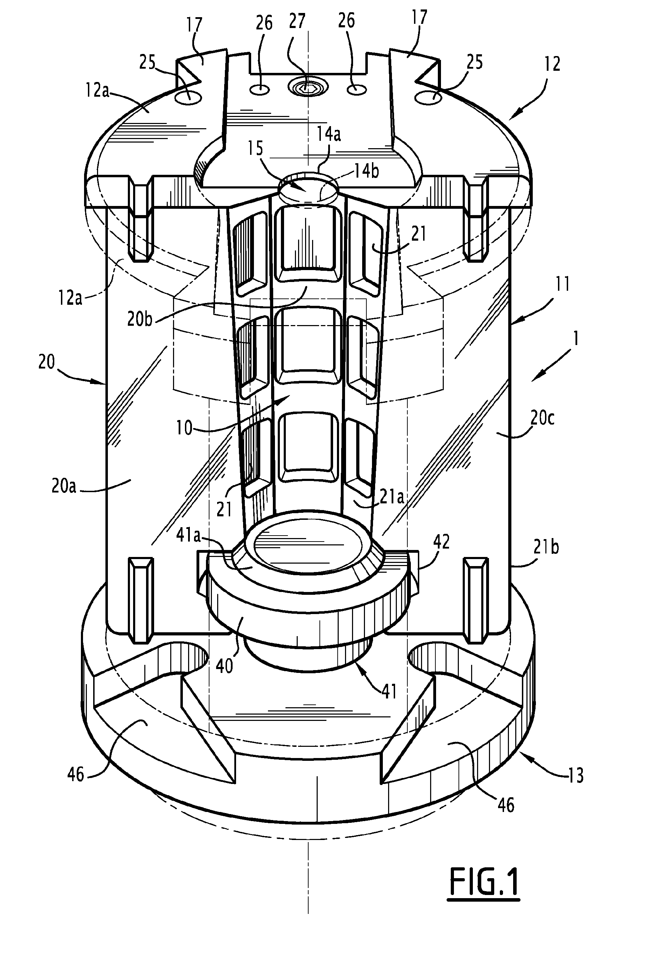

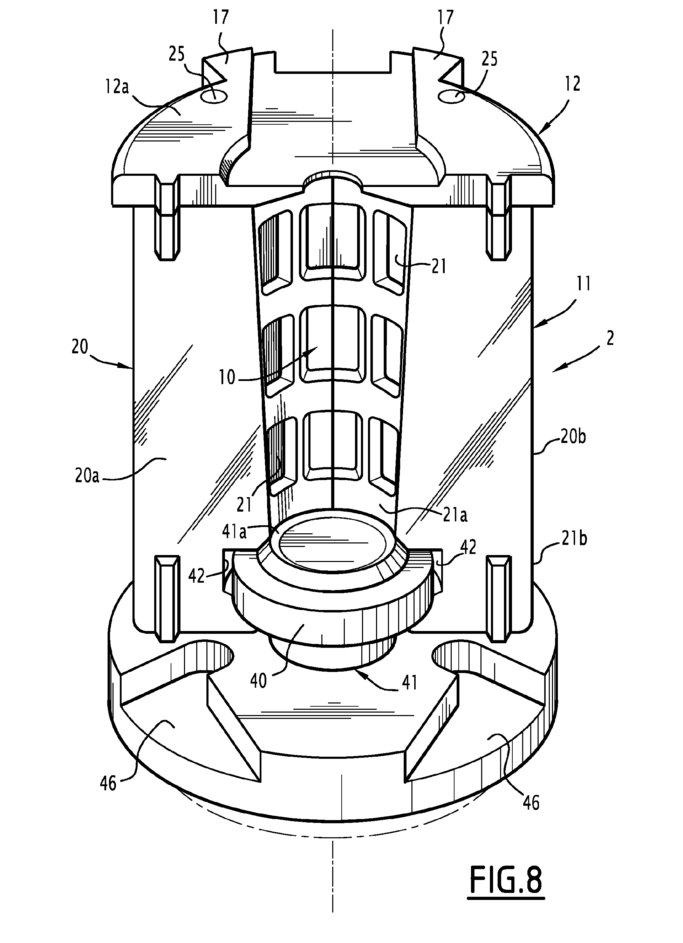

Sur les Figures 1 et 8, on a représenté schématiquement deux modes de réalisation d'un moule finisseur, le moule finisseur de la Figure 1 étant désigné par la référence générale 1 et le moule finisseur de la Figure 8 étant désigné par la référence générale 2.

Les éléments communs aux deux modes de réalisation sont désignés dans la description qui suit, par les mêmes références.

Les moules finisseurs 1 et 2 sont destinés à la fabrication d'un article en verre, comme par exemple un flacon en verre et de préférence comportant sur sa face externe au moins un motif en relief et/ou en creux.

A titre d'exemple, les moules finisseurs 1 et 2 sont destinés au formage de flacon en verre de forme générale cylindrique et comportant un col. Le moule finisseur selon l'invention peut également être destiné au moulage de flacons de forme ovale, elliptique, carrée ou hexagonale ou en forme d'étoile à six branches par exemple.

Le moule finisseur 1 ou 2 comporte une empreinte 10 de réception d'une ébauche, non représentée, préalablement formée. Cette empreinte 10 est délimitée par un corps central 11 disposé entre un couvercle 12 et un fond 13.

D'une manière générale, le corps central 11 est formé de plusieurs secteurs 20 identiques et complémentaires dont le nombre est pair et au moins égal à quatre.

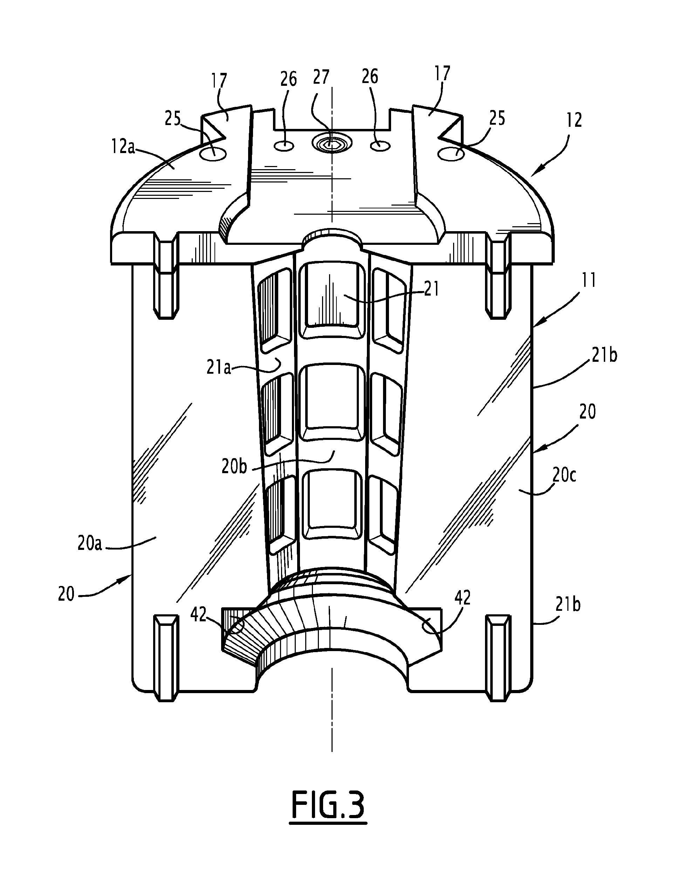

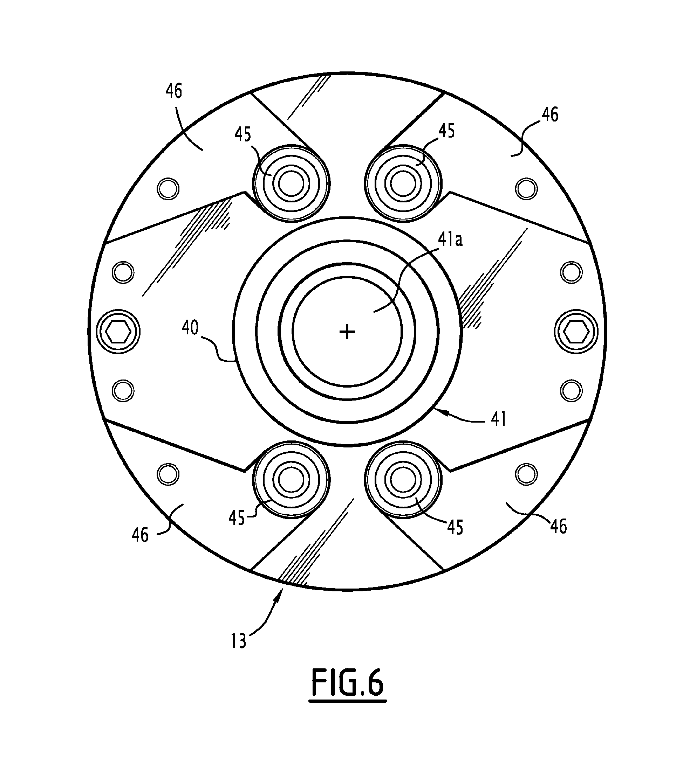

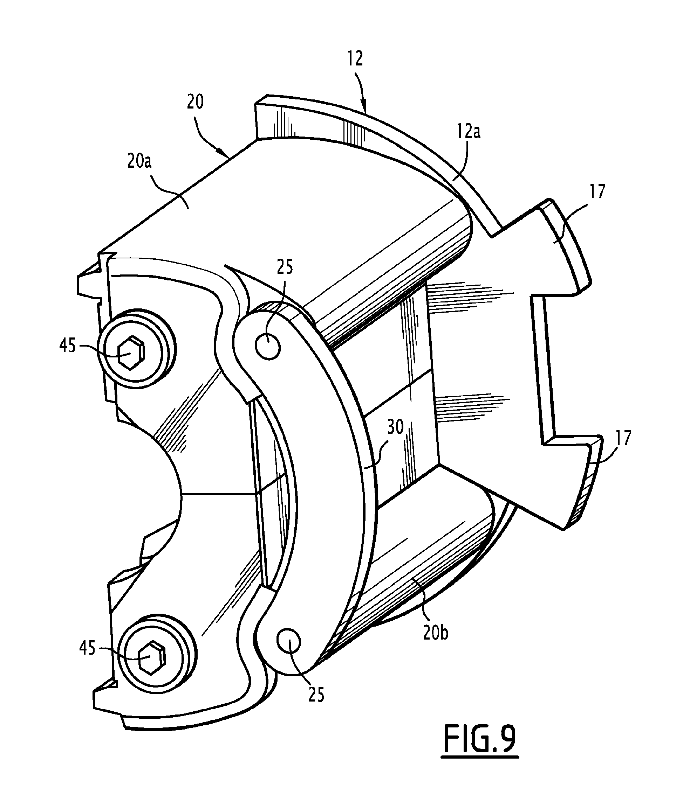

Dans le mode de réalisation représenté sur les Figures 1 à 7, le corps central 11 du moule finisseur 10 comporte six secteurs 20 complémentaires uniformément répartis autour de l'empreinte 10 et dans le mode de réalisation représenté sur les Figures 8 et 9, le corps central 11 du moule finisseur 2 comporte quatre secteurs complémentaires 20 uniformément répartis autour de l'empreinte 10.

Ainsi que représenté sur les Figures 1 et 8, chaque secteur 20 comporte une face interne 21a présentant un profil en forme de portion de cylindre et comportant des motifs 21 en relief et/ou en creux destinés à être formés sur la face externe du flacon en verre.

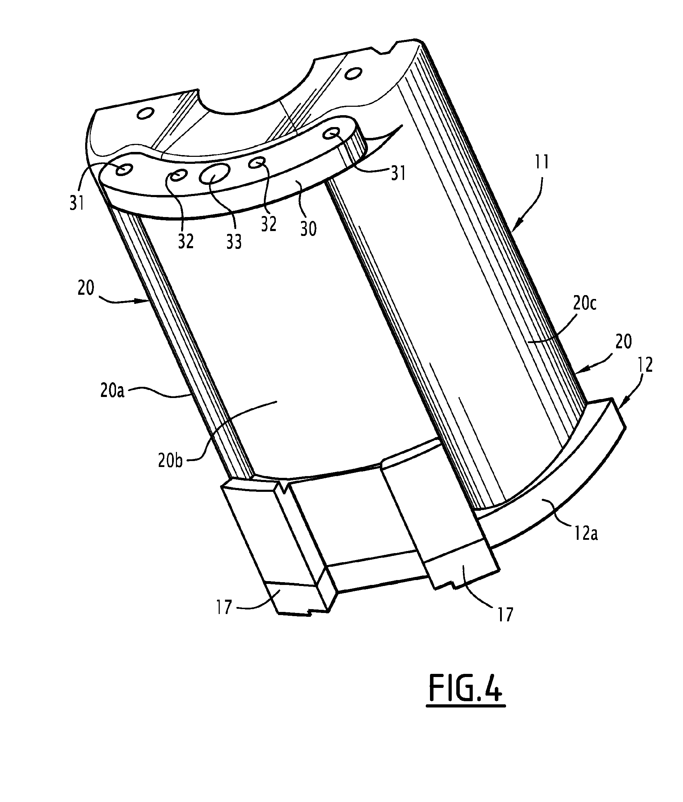

Comme montré notamment sur les Figures 4 et 9, la face externe 21 b de chaque secteur 20 présente également un profil en forme de portion de cylindre.

Le couvercle 12 est formé de deux demi-couvercles 12a et 12b symétriques comportant chacun un demi-orifice central 14a et 14b déterminant en position de fermeture des deux demi-couvercles 12a et 12b, c'est-à-dire lorsque les deux demi-couvercles 12a et 12b sont l'un contre l'autre, un orifice 15 de positionnement d'un col, non représenté, de l'ébauche de l'article en verre, placée dans l'empreinte 10.

D'une manière générale, les deux demi-couvercles 12a et 12b sont reliés à chaque secteur 20 d'une moitié de secteurs 20 de l'ensemble des secteurs.

Selon le mode de réalisation représenté sur les Figures 1 à 3, le demi-couvercle 12a coiffe trois secteurs 20, respectivement 20a, 20b, 20c et le demi-couvercle 12b coiffe également trois secteurs 20, respectivement 20a, 20b, 20c.

Ainsi que montré sur les Figures 1 à 3, le demi-couvercle 12a est relié aux deux secteurs latéraux, respectivement 20a et 20c par un axe d'articulation 25 et ce demi-couvercle 12a est relié au secteur central 20b par deux axes 26 et est fixé sur ce secteur central 20b par un organe de vissage 27, comme par exemple une vis.

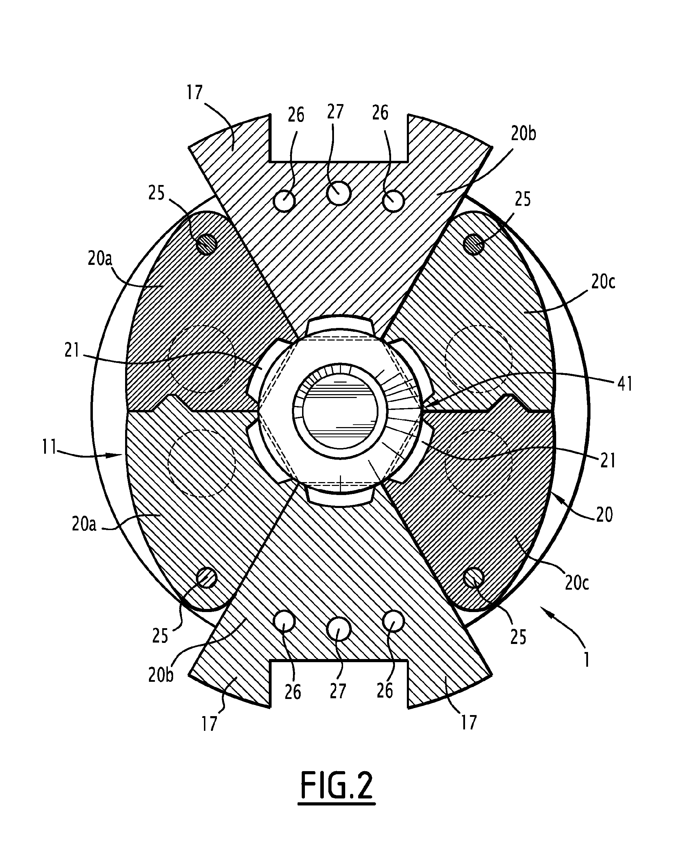

De même, le demi-couvercle 12b est relié au secteur 20a, 20b, 20c de l'autre moitié de secteur 20 de manière analogue, comme montré schématiquement à la Figure 2.

Les faces internes 21a des trois secteurs, respectivement 20a, 20b, 20c couvrent une demi-circonférence de l'empreinte 10 du moule finisseur 1.

Ainsi que représenté sur les Figures 1, 2 et 4, chaque demi-couvercle 12a, 12b, ainsi que la partie supérieure du secteur central 20b de chaque moitié de secteurs 20 comportent extérieurement deux oreilles opposées 17 destinées à être reliées par des moyens appropriés à des moyens de commande, non représentés, de type connu. Ces moyens de commande permettent de déplacer chaque demi-couvercle 12a, 12b ainsi que les trois secteurs 20a, 20b, 20c correspondant entre une position active de moulage de l'article à partir de l'ébauche, c'est-à-dire en position de fermeture de l'empreinte 10 et une position passive de démoulage de l'article, c'est-à-dire en position d'ouverture de ladite empreinte 10, comme on le verra ultérieurement.

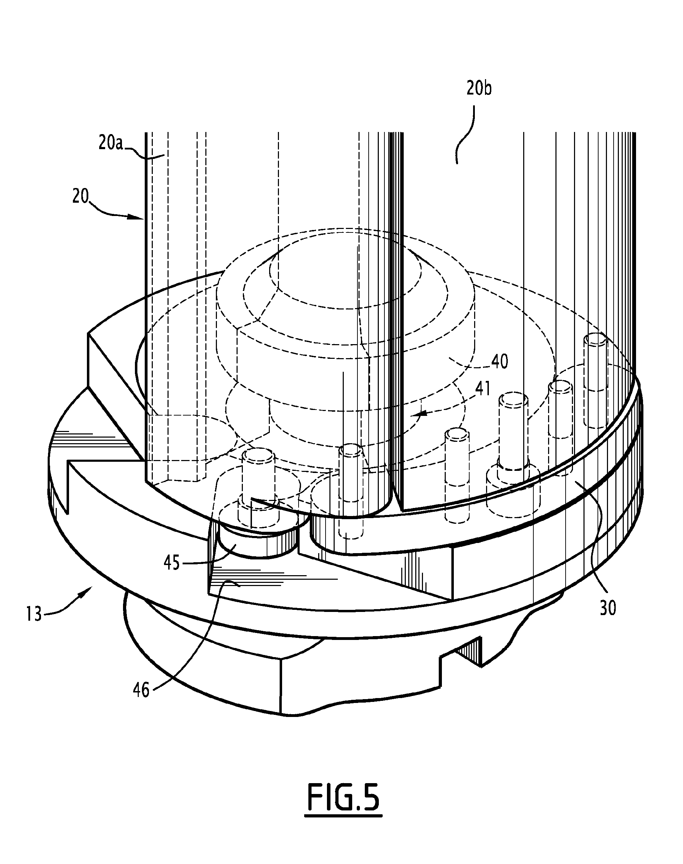

Les secteurs adjacents 20a, 20b, 20c de chaque moitié de secteurs 20 sont reliés entre eux, à l'opposé du couvercle 12, par un organe de liaison constitué par une patte 30 en forme d'arc de cercle (Figure 4) et cette patte 30 est en appui sur la face supérieure du fond 13 (Figure 5). Comme montré à la Figure 4, la patte 30 est reliée à chaque secteur latéral 20a et 20c de la moitié de secteurs 20 par un axe d'articulation 31 et cette patte 30 est reliée au secteur central 20b par deux axes 32 et par un organe de vissage 33 formé par exemple par une vis.

L'autre moitié de secteurs 20 comporte également une patte 30 en forme d'arc de cercle reliée aux secteurs 20a, 20b, 20c correspondants de manière analogue.

Le fond 13 du moule finisseur 1 ou 2 comporte des moyens de centrage des secteurs 20 dans la position active desdits secteurs 20, ces moyens de centrage étant identiques pour les deux modes de réalisation.

Ces moyens de centrage comprennent un rebord 40 ménagé sur une partie 41 en saillie au-dessus du fond 13 et dont la face supérieure 41a forme le fond de l'empreinte 10. Ce rebord 40 est destiné à coopérer avec une rainure 42 ménagée à la partie inférieure de chaque secteur 20.

Enfin, le fond 13 comporte des moyens de guidage des secteurs 20 entre les positions, respectivement active et passive.

Selon le mode de réalisation représenté sur les figures 1, 5 et 6, les moyens de guidage comprennent, pour les secteurs latéraux 20a et 20c de chaque moitié de secteurs 20, un galet 45 disposé sur la face inférieure de chacun de ces secteurs 20a et 20c. Chaque galet 45 coopère avec une gorge 46 ménagée sur la face supérieure du fond 13.

Le guidage du secteur central 20b lors du déplacement des ces secteurs 20a, 20b, 20c est assuré par la patte 30 qui glisse sur la face supérieure du fond 13.

Lors de la pose d'une ébauche dans l'empreinte 10 du moule finisseur 1, les moyens de commande sont actionnés et agissent sur les deux demi-couvercles 12a et 12b de façon à déplacer radialement ces deux demi-couvercles 12a et 12b vers l'extérieur.

Chaque demi-couvercle 12a et 12b déplace radialement les trois secteurs 20a, 20b et 20c vers l'extérieur. Le secteur central 20b glisse sur la face supérieure du fond 13 et les secteurs latéraux 20a et 20c sont entraînés radialement vers l'extérieur par le demi-couvercle 12a ou 12b correspondant, ainsi que par la patte 30. Ces deux secteurs latéraux 20a et 20c pivotent autour des axes 25 et 31 et ils sont guidés chacun par le galet 45 qui se déplace dans la gorge 46 correspondante.

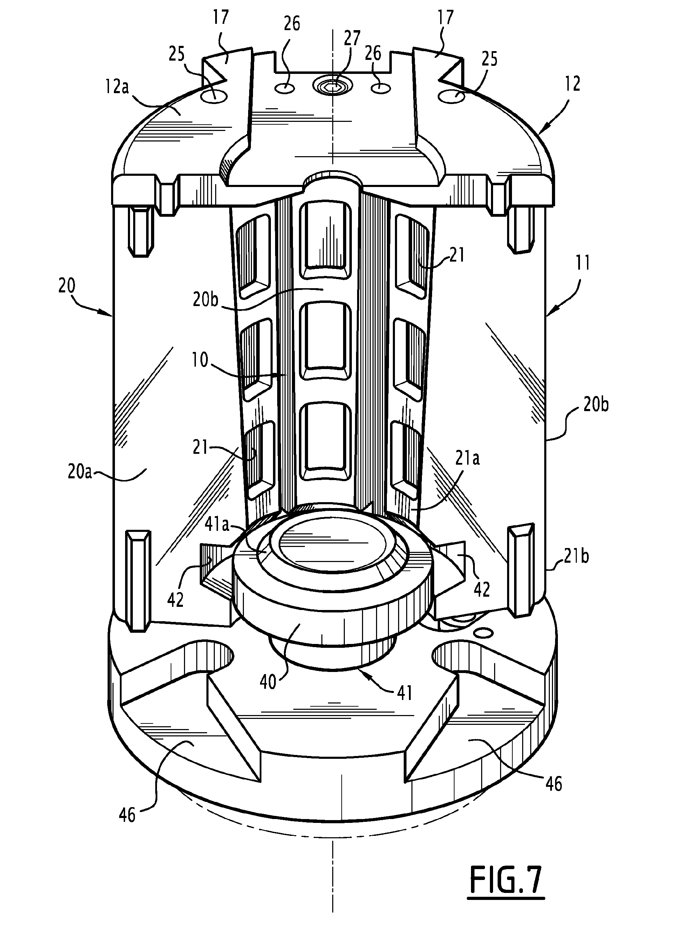

Les rainures 42 de secteur 20 s'écartent du rebord 40, comme représenté à la Figure 7.

L'ensemble des secteurs 20, c' est à dire les six secteurs 20 dans le cas du premier mode de réalisation sont écartés les uns des autres et les deux demi-couvercles 12a et 12b sont également écartés l'un de l'autre permettant l'introduction d'une ébauche dans l'empreinte 10. Cette ébauche est posée dans l'empreinte 10 et elle repose sur la face supérieure 41a de la partie 41.

Pour la fermeture du moule finisseur 1, les moyens de commande sont actionnés en sens inverse de façon à ramener les secteurs 20 en position active dans laquelle ces secteurs 20 sont appliqués latéralement les uns contre les autres et dans laquelle les demi-couvercles 12a et 12b sont appliqués l'un contre l'autre de façon à déterminer l'orifice 15 dans lequel le col de l'ébauche est maintenu.

Ensuite, de l'air est injecté dans l'ébauche de façon à former le flacon en verre et de façon à imprimer les motifs 21 en relief et/ou en creux sur la face externe du flacon en verre.

Après le formage du flacon en verre, le moule finisseur 1 est de nouveau ouvert en procédant de manière analogue et le flacon en verre ainsi formé est retiré de l'empreinte 10 du moule finisseur 1.

Dans le cas du second mode de réalisation représenté sur les figures 8 et 9, le corps 11 du moule finisseur 2 est formé par quatre secteurs 20 identiques et complémentaires et uniformément répartis pour former l'empreinte 10.

Le couvercle 12 est aussi formé par deux demi-couvercles, respectivement 12a et 12b, le demi-couvercle 12a portant deux secteurs 20 et le demi-couvercle 12b portant également deux secteurs 20.

La face interne 21 a de chaque secteur 20 a la forme d'une portion de cylindre et les faces internes de ces deux secteurs 20 couvrent une demi-circonférence de l'empreinte 10. La face interne de chaque secteur 20 comporte des motifs 21 en relief et /ou en creux destinés à être imprimés sur la face externe du flacon en verre.

La face externe de chaque secteur 20 présente aussi la forme d'une portion de cylindre.

Chaque demi-couvercle 12a et 12b est relié aux deux secteurs 20 correspondant par un axe 25 et les moyens de centrage et de guidage sont également analogues au précédent mode de réalisation et désignés par les mêmes références.

Dans ce cas également, les deux secteurs 20 d'un demi-couvercle 12a ou 12b sont également reliés entre eux, à l'opposé de ce demi-couvercle, par une patte 30 en forme d'arc de cercle, comme montrée à la Figure 9.

Dans ce mode de réalisation, chaque demi-couvercle 12a et 12b est relié à la patte 30 par l'axe 25 qui traverse le secteur 20 correspondant. Un jeu mécanique est ajusté pour permettre le pivotement des secteurs 20a et 20b.

par une plaque verticale 60 placée à l'intérieur d'un logement 61 ménagé dans les faces externes des deux secteurs 20 associés au couvercle 12a ou 12b correspondant (Fig. 9).

Chaque demi-couvercle 12a et 12b comporte également des oreilles 17 destinées à être reliées par des organes appropriés à des moyens de commande, non représentés.

Le déplacement des secteurs 20 radialement et simultanément entre la position active de moulage du flacon à partir de l'ébauche et dans laquelle les secteurs sont appliqués latéralement les uns contre les autres et une positon passive de démoulage du flacon formé et dans laquelle lesdits secteurs sont écartés les uns des autres, est identique au précédent mode de réalisation.

Le moule finisseur selon l'invention permet d'imprimer sur la face externe d'un article en verre, des motifs en relief et/ou en creux et d'assurer le démoulage de ce type d'articles sans dégrader ces motifs du fait de la cinématique de déplacement des éléments constituant ce moule entre la position active de moulage et la position passive de démoulage.

## Revendications

1. Moule finisseur pour le formage d'un article en verre, comme par exemple un flacon en verre, du type comprenant une empreinte (10) de réception d'une ébauche dudit article et délimitée par un corps central (11) disposé entre un couvercle (12) et un fond (13), **caractérisé en ce que** le corps central (11) est formé par un nombre pair et au moins égal à quatre secteurs (20) complémentaires, déplaçables radialement et simultanément entre une position active de moulage de l'article à partir de ladite ébauche dans laquelle les secteurs (20) sont appliqués latéralement les uns contre les autres et une position passive de démoulage de l'article dans laquelle lesdits secteurs sont écartés les uns des autres.

2. Moule finisseur selon la revendication 1, **caractérisé en ce que** le couvercle (12) est formé de deux demi-couvercles (12a, 12b) reliés chacun par un axe d'articulation (25, 26) à chaque secteur (20) d'une moitié de secteurs (20) de l'ensemble des secteurs.

3. Moule finisseur selon la revendication 2, **caractérisé en ce que** les demi-couvercles (12a, 12b) sont reliés à des moyens de commande du déplacement de chaque demi-couvercle (12a, 12b) entre une position de fermeture de l'empreinte (10) et une position d'ouverture de ladite empreinte (10).

4. Moule finisseur selon la revendication 2 ou 3, **caractérisé en ce que** chaque demi-couvercle (12a, 12b) comporte un demi-orifice (14a, 14b) central déterminant, en position de fermeture des demi-couvercles (12a, 12b), un orifice (15) de positionnement d'un col de l'ébauche de l'article en verre.

5. Moule finisseur selon l'une quelconque des revendications précédentes, **caractérisé en ce que** les secteurs (20a, 20b, 20c) adjacents d'une moitié de secteurs (20) sont reliés entre eux, à l'opposé du couvercle (12), par une organe de liaison (30) articulé sur chacun desdits secteurs.

6. Moule finisseur selon la revendication 5, **caractérisé en ce que** chaque organe de liaison comprend une patte (30) en forme d'arc de cercle.

7. Moule finisseur selon l'une quelconque des revendications 1 à 6, **caractérisé en ce que** le fond (13) comporte des moyens (40) de centrage des secteurs (20) dans la position active desdits secteurs.

8. Moule finisseur selon la revendication 7, **caractérisé en ce que** les moyens de centrage comprennent un rebord (40) ménagé sur le fond (13) et en saillie à l'intérieur de l'empreinte (10) et par une rainure (42) ménagée à la partie inférieure de chaque secteur (20) et destinée à coopérer chacune avec ledit rebord (40).

9. Moule finisseur selon l'une quelconque des revendications 1 à 8, **caractérisé en ce que** le fond (13) comporte des moyens de guidage des secteurs (20) entre les positions, respectivement active et passive.

10. Moule finisseur selon la revendication 9, **caractérisé en ce que** les moyens de guidage de chaque secteur (20) comprennent une gorge (46) ménagée sur la face supérieure du fond (13) et destinée à coopérer avec un galet (45) disposé sur la face inférieure du secteur (20) correspondant.
